# EUROPÄISCHE PATENTSCHRIFT

(11) **EP 3 011 195 B1**
(45) Veröffentlichungstag und Bekanntmachung des Hinweises auf die Patenterteilung: **27.03.2019**
(21) Anmeldenummer: 14730754.0
(22) Anmeldetag: 17.06.2014
(51) Int. Cl.: F16D 23/06

(54) **KOPPLUNGSVORRICHTUNG FÜR EIN KRAFTFAHRZEUG**
COUPLING DEVICE FOR A MOTOR VEHICLE
DISPOSITIF D'ACCOUPLEMENT POUR VÉHICULE AUTOMOBILE

(30) Priorität: 22.06.2013 DE 102013010523; 11.07.2013 DE 102013011555
(43) Veröffentlichungstag der Anmeldung: 27.04.2016
(73) Patentinhaber: Daimler AG, 70327 Stuttgart (DE)
(72) Erfinder: CHRISOFAKIS, Emmanuel, 71332 Waiblingen (DE); HÄRTER, Tobias, 70174 Stuttgart (DE); KULL, Thomas, 71332 Waiblingen (DE); SCHEFFEL, Frank, 70180 Stuttgart (DE); SCHRÖDER, Joachim, 70374 Stuttgart (DE); TONIUS, Nils, 71384 Weinstadt (DE)
(74) Vertreter: JENSEN & SON
(86) Internationale Anmeldenummer: PCT/EP2014/001649
(87) Internationale Veröffentlichungsnummer: WO 2014/202211

(56) Entgegenhaltungen:
- EP-A2- 2 505 866
- WO-A1-2006/110945
- DE-A1- 2 538 781
- DE-A1- 3 035 045
- DE-A1- 19 711 971
- DE-A1-102011 108 024
- DE-B- 1 215 450
- GB-A- 534 727
- US-A- 1 036 560
- US-A- 2 049 127

## Beschreibung

Die Erfindung betrifft eine Kopplungsvorrichtung nach dem Oberbegriff des Anspruchs 1.

Aus den Druckschriften DE 30 35 045 A1, EP 2 505 866 A2, DE 25 38 781 A1 sind Kopplungsvorrichtungen mit einer Reibschlusseinheit und einer parallel zur Reibschlusseinheit geschalteten Formschlusseinheit, die zwei formschlüssig miteinander verbindbare Formschlusselemente aufweist, die entlang einer Betätigungsrichtung relativ zueinander verschiebbar angeordnet sind und die jeweils zumindest eine Klaue aufweisen bekannt. Diese Druckschriften zeigen auch Klauen von Formschlusseinheiten, die jeweils zumindest teilweise eine Kopffläche aufweisen, die schräg zur Betätigungsrichtung orientiert ist.

Aus der gattungsgemäßen DE 10 2011 108 024 A1 ist bereits eine Kopplungsvorrichtung für ein Kraftfahrzeug, mit einer Reibschlusseinheit und einer parallel zur Reibschlusseinheit geschalteten Formschlusseinheit, die zwei formschlüssig miteinander verbindbare Formschlusselemente aufweist, die entlang einer Betätigungsrichtung relativ zueinander verschiebbar angeordnet sind und die jeweils zumindest eine Klaue aufweisen, bekannt. Dabei sind zwei voneinander unabhängige Betätigungseinheiten zur Betätigung der Reibschlusseinheit und der Formschlusseinheit vorgesehen.

Der Erfindung liegt insbesondere die Aufgabe zugrunde, einen Komfort der Kopplungsvorrichtung zu erhöhen. Diese Aufgabe wird durch eine erfindungsgemäße Kopplungsvorrichtung entsprechend dem Anspruch 1 gelöst. Weiterbildungen der Erfindung ergeben sich aus den abhängigen Ansprüchen.

Die Erfindung geht aus von einer Kopplungsvorrichtung für ein Kraftfahrzeug, mit einer Reibschlusseinheit und einer parallel zur Reibschlusseinheit geschalteten Formschlusseinheit, die zumindest zwei formschlüssig miteinander verbindbare Formschlusselemente aufweist, die entlang einer Betätigungsrichtung relativ zueinander verschiebbar angeordnet sind und die jeweils zumindest eine Klaue aufweisen.

Es wird vorgeschlagen, dass die Klauen jeweils zumindest teilweise eine Kopffläche aufweisen, die schräg zur Betätigungsrichtung orientiert ist. Dadurch kann eine besonders vorteilhaft angeschrägte Klauengeometrie bereitgestellt werden, durch die die Formschlusselemente bei einer Zahn-auf-Zahnstellung durch die schräg zur Betätigungsrichtung orientierten Kopfflächen vorteilhaft geführt werden können, wodurch die Zahn-auf-Zahnstellung durch eine in die Betätigungsrichtung wirkende Betätigungskraft kontrolliert aufgelöst werden kann. Dabei kann durch die schräg zur Betätigungsrichtung orientierten Kopfflächen bereits während der Zahn-auf-Zahnstellung eine Mindestüberdeckung der Klauen erreicht werden, wodurch ein Ratschen verhindert werden kann. Weiter kann die Zahn-auf-Zahnstellung durch die schräg zur Betätigungsrichtung orientierten Kopfflächen kontinuierlich aufgelöst werden, wodurch ein schlagartiges und damit mit einer Stoßbelastung verbundenes Auflösen der Zahn-auf-Zahnstellung verhindert werden kann. Durch die schräg orientierten Kopfflächen der Klauen kann die Betätigungskraft, durch die eines der Formschlusselemente in das andere Formschlusselement eingerückt wird, vorteilhaft umgelenkt und zum Auflösen der Zahn-auf-Zahnstellung genutzt werden. Durch die umgelenkte Betätigungskraft kann die Reibschlusseinheit überdrückt werden, wodurch die Formschlusselemente mittels der Betätigungskraft gegeneinander verdreht werden können. Dadurch kann die Zahn-auf-Zahnstellung zuverlässig und komfortabel aufgelöst werden, wodurch ein Komfort der Kopplungsvorrichtung erhöht werden kann. Unter einer "Kopplungsvorrichtung" soll insbesondere sowohl eine Kupplungsvorrichtung als auch eine Bremsvorrichtung verstanden werden. Unter einer "Kupplungsvorrichtung" soll insbesondere eine Vorrichtung verstanden werden, die dazu vorgesehen ist, zwei drehbar angeordnete Kopplungselemente wahlweise drehfest miteinander zu verbinden oder voneinander zu trennen. Unter einer "Bremsvorrichtung" soll insbesondere eine Vorrichtung verstanden werden, die dazu vorgesehen ist, ein drehbares Kopplungselement und ein feststehendes Kopplungselement, das vorzugsweise permanent drehfest mit einem feststehenden Bauteil verbunden oder einstückig mit diesem ausgebildet ist, wahlweise drehfest miteinander zu verbinden oder voneinander zu trennen. Das feststehende Bauteil ist vorteilhaft als ein Gehäuse und besonders vorteilhaft als ein Getriebegehäuse ausgebildet. Unter einer "Reibschlusseinheit" soll insbesondere eine Einheit verstanden werden, die die drehfeste Verbindung im Wesentlichen durch einen Reibschluss herstellt, wie beispielsweise eine Lamellenkupplung oder eine Lamellenbremse. Unter einer "Formschtusseinheit" soll insbesondere eine Einheit verstanden werden, die die drehfeste Verbindung im Wesentlichen durch einen Formschluss herstellt, wie beispielsweise eine Klauenkupplung oder eine Klauenbremse. Die Reibschlusseinheit und die Formschlusseinheit sind vorzugsweise wirkungsmäßig zwischen den zwei Kopplungselementen angeordnet. Die Betätigungsrichtung ist vorteilhaft parallel zu einer Rotationsachse der beiden Formschlusselemente angeordnet. Unter einer "Kopffläche" soll insbesondere eine Fläche einer Klaue verstanden werden, die dem korrespondierenden Formschlusselement zugewandt ist. Die Kopffläche ist vorzugsweise zwischen zwei Flanken der Klaue gebildet. In der Zahn-auf-Zahnstellung kontaktieren sich vorzugsweise die Kopfflächen der Klauen des ersten Formschlusselements und die Kopfflächen der Klauen des zweiten Formschlusselements. Die Kopffläche weist zumindest eine Flächennormale mit einer axial gerichteten Richtungskomponente größer als Null auf. Der Begriff "axial" ist insbesondere auf die Betätigungsrichtung oder die Rotationsachse bezogen, sodass der Ausdruck "axial" eine Richtung bezeichnet, die auf der Betätigungsrichtung oder der Rotationsachse oder parallel zu der Betätigungsrichtung oder der Rotationsachse verläuft. Unter "schräg zur Betätigungsrichtung" soll insbesondere verstanden werden, dass die Kopffläche zumindest eine Flächennormale aufweist, die schräg zur Betätigungsrichtung orientiert ist. Unter "vorgesehen" soll insbesondere speziell ausgelegt, ausgestattet und/oder angeordnet verstanden werden.

Um Kosten einzusparen, wird weiter vorgeschlagen, dass die Kopfflächen jeweils zumindest im Wesentlichen eben ausgebildet sind, wodurch die schräg zur Betätigungsrichtung orientierten Kopfflächen einfach hergestellt werden können. Unter einer "ebenen Kopffläche" soll insbesondere eine Kopffläche verstanden werden, der eine Krümmung fehlt. Unter "im Wesentlichen eben" soll in diesem Zusammenhang insbesondere verstanden werden, dass wenigstens 60%, vorteilhaft wenigstens 80% und besonders vorteilhaft wenigstens 90% der Kopffläche eben ausgebildet ist.

Ferner wird vorgeschlagen, dass die Kopfflächen jeweils zumindest eine Flächennormale mit einer in Umfangsrichtung gerichteten Richtungskomponente größer als Null aufweisen. Dadurch kann die Kopffläche in Umfangsrichtung gerichtet werden, wodurch in der Zahn-auf-Zahnstellung eine zum Auflösen der Zahn-auf-Zahnstellung nutzbare Umfangskraft bereitgestellt werden kann, durch die die Reibschlusseinheit zum Verdrehen eines der Formschlusselemente überdrückt werden kann. Der Begriff "Umfangsrichtung" ist insbesondere auf die Betätigungsrichtung oder die Rotationsachse bezogen, sodass der Ausdruck "Umfangsrichtung" eine Richtung bezeichnet, die um die Betätigungsrichtung oder um die Rotationsachse verläuft. Die Umfangsrichtung liegt vorzugsweise in einer Ebene, die senkrecht zur Betätigungsrichtung oder zur Rotationsachse orientiert ist.

Insbesondere ist es vorteilhaft, wenn die Kopfflächen jeweils zumindest eine Flächennormale mit einer radial gerichteten Richtungskomponente gleich Null aufweisen, wodurch die Kopfflächen in ihrer Herstellung weiter vereinfacht werden können. Der Begriff radial" ist insbesondere auf die Betätigungsrichtung oder die Rotationsachse bezogen, sodass der Ausdruck "radial" eine Richtung bezeichnet, die senkrecht zur Betätigungsrichtung oder zur Rotationsachse verläuft.

Weiter ist es vorteilhaft, wenn die Klauen jeweils eine Kopplungsflanke aufweisen, die jeweils mit einer durch die zugehörige Kopffläche definierten Ebene einen stumpfen Winkel einschließen. Dadurch können die Kopplungsflanken besonders groß ausgeführt werden, wodurch die Formschlusselemente besonders zuverlässig formschlüssig miteinander verbunden werden können. Unter einer "Kopplungsflanke" soll insbesondere eine Flanke der Klaue verstanden werden, die dazu vorgesehen ist, zur Drehmomentübertragung eine korrespondierende Klaue zu kontaktieren. Vorzugsweise ist die Kopplungsflanke durch eine Oberfläche der Klaue gebildet, dessen Flächennormalen vorteilhaft von der Klaue weg zeigen. Unter einer "durch die Kopffläche definierten Ebene" soll insbesondere eine Ebene verstanden werden, in der die Kopffläche angeordnet ist. Unter einer "zugehörigen Kopffläche" soll in diesem Zusammenhang insbesondere eine Kopffläche verstanden werden, die durch die Klaue gebildet ist, die auch die Kopplungsflanke bildet, mit der die durch die Kopffläche definierten Ebene den stumpfen Winkel einschließt.

Ferner ist es vorteilhaft, wenn die Klauen jeweils eine der Kopplungsflanke gegenüberliegende Flanke aufweisen, die jeweils mit der durch die zugehörige Kopffläche definierten Ebene einen spitzen Winkel einschließen, wodurch die Klauen besonders vorteilhaft einseitig angeschrägt werden können. Vorzugsweise ist die Flanke durch eine Oberfläche der Klaue gebildet, dessen Flächennormalen vorteilhaft von der Klaue weg zeigen.

In einer vorteilhaften Ausgestaltung schließen die Kopplungsflanken jeweils mit einer am zugehörigen Klauengrund angeordneten Ebene, die senkrecht zur Betätigungsrichtung orientiert ist, einen rechten Winkel ein, wodurch ein hohes Drehmoment übertragen werden kann. Unter einer "am Klauengrund angeordneten Ebene" soll insbesondere eine Ebene verstanden werden, in der eine Anbindungsfläche, mit der die Klaue, vorzugsweise an einen Grundkörper, befestigt ist, angeordnet ist. Unter einem "zugehörigen Klauengrund" soll in diesem Zusammenhang insbesondere ein Klauengrund verstanden werden, der durch die Klaue gebildet ist, die auch die Kopplungsflanke bildet, mit der die am Klauengrund angeordnete Ebene den rechten Winkel einschließt.

In einer weiteren erfindungsgemäßen Ausgestaltung erstrecken sich die Kopfflächen jeweils bis zu dem Klauengrund, wodurch Stoßkräfte beim Auflösen der Zahn-auf-Zahnstellung reduziert oder gar verhindert werden können.

Besonders vorteilhaft ist es, wenn die Klauen jeweils stirnseitig angeordnet sind, wodurch eine besonders vorteilhafte Kopplungsvorrichtung bereitgestellt werden kann.

Weiter wird vorgeschlagen, dass die Reibschlusseinheit zumindest ein Reibschlusselement aufweist, das permanent drehfest mit einem der Formschlusselemente verbunden ist. Dadurch kann sich das permanent drehfest mit dem Reibschlusselement verbundene Formschlusselement durch Überdrücken der Reibschlusseinheit relativ zum einrückenden Formschlusselement verdrehen, wodurch die Zahn-auf-Zahnstellung besonders einfach aufgelöst werden kann. Unter "drehfest verbunden" soll insbesondere eine Verbindung verstanden werden, bei der ein Leistungsfluss über eine vollständige Umdrehung gemittelt mit einem unveränderten Drehmoment, einer unveränderten Drehrichtung und/oder einer unveränderten Drehzahl übertragen wird.

Weitere Vorteile ergeben sich aus der folgenden Figurenbeschreibung. In den Figuren sind drei Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: ein Getriebeschema eines Mehrstufengetriebes, das eine Kopplungsvorrichtung mit einer Reibschlusseinheit und einer parallel zur Reibschlusseinheit geschalteten Formschlusseinheit aufweist,
- Fig. 2: die Kopplungsvorrichtung schematisch dargestellt,
- Fig. 3: schematisch die Formschlusseinheit in einer Zahn-auf-Zahnstellung,
- Fig. 4: schematisch die Formschlusseinheit in einem geschlossenen Zustand,
- Fig. 5: eine alternativ ausgebildete Formschlusseinheit in einem geschlossenen Zustand schematisch dargestellt und
- Fig. 6: ein drittes Ausführungsbeispiel einer Formschlusseinheit in einem geschlossenen Zustand schematisch dargestellt.

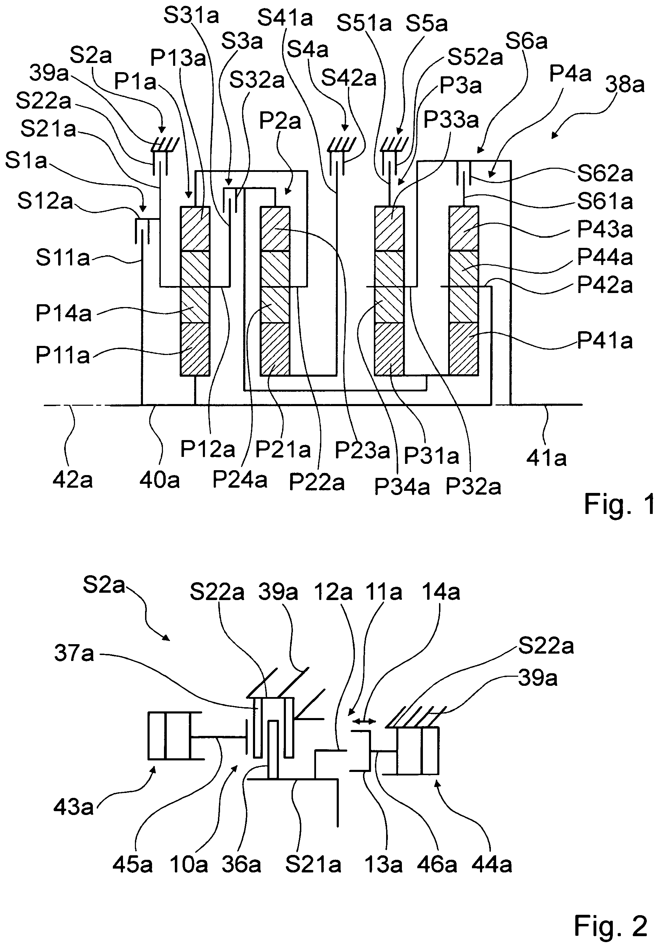

Figur 1 zeigt ein Mehrstufengetriebe eines Kraftfahrzeugs. Das Kraftfahrzeug weist einen nicht näher dargestellten Verbrennungsmotor zum Antrieb des Kraftfahrzeugs und nicht näher dargestellte Antriebsräder auf. Das Mehrstufengetriebe ist dabei in einem Kraftfluss zwischen dem Verbrennungsmotor und den Antriebsrädern angeordnet. Das Mehrstufengetriebe verbindet den Verbrennungsmotor mit den Antriebsrädern. Mittels des Mehrstufengetriebes wird ein Übersetzungsverhältnis zwischen dem Verbrennungsmotor und den Antriebsrädern eingestellt. Das Mehrstufengetriebe kann mit einem Hybridantriebsmodul verbunden werden, mittels dem ein Antriebsmoment verändert werden kann. Weiter kann mittels des Hybridantriebsmoduls und dem Mehrstufengetriebe ein CVT realisiert werden, wodurch das Übersetzungsverhältnis zumindest in Teilbereichen stufenlos eingestellt werden kann.

Zur Einstellung von zehn Getriebegängen weist das Mehrstufengetriebe einen Getrieberadsatz 38a auf. Der Getrieberadsatz 38a weist neun Vorwärtsgetriebegänge und einen Rückwärtsgetriebegang auf. Die Vorwärtsgetriebegänge weisen aufeinanderfolgende Übersetzungsverhältnisse auf. Dabei weist der erste Vorwärtsgetriebegang das größte Übersetzungsverhältnis und der letzte, in diesem Ausführungsbeispiel neunte Vorwärtsgetriebegang das kleinste Übersetzungsverhältnis auf, wobei die Übersetzungsverhältnisse vom niedrigen zum hohen Vorwärtsgetriebegang abnehmen. Der Rückwärtsgetriebegang weist im Vergleich zu den Vorwärtsgetriebegängen eine Drehrichtungsumkehr auf.

Das Mehrstufengetriebe weist weiter ein Getriebegehäuse 39a auf, das ortsfest angeordnet ist. Der Getrieberadsatz 38a ist innerhalb des Getriebegehäuses 39a angeordnet.

Zur Einleitung eines von dem Verbrennungsmotor bereitgestellten Antriebsmoments in den Getrieberadsatz 38a weist das Mehrstufengetriebe eine Getriebeeingangswelle 40a auf. Die Getriebeeingangswelle 40a ist in einem von dem Verbrennungsmotor ausgehenden Kraftfluss nach dem Verbrennungsmotor und vor dem Getrieberadsatz 38a angeordnet. Sie ist zur drehfesten Anbindung des Verbrennungsmotors und damit zur drehfesten Anbindung einer Kurbelwelle des Verbrennungsmotors an den Getrieberadsatz 38a vorgesehen. Die Getriebeeingangswelle 40a verbindet den Verbrennungsmotor antriebstechnisch mit dem Getrieberadsatz 38a. Der Getriebeeingangswelle 40a kann ein nicht näher dargestelltes Modul vorgeschaltet sein, das insbesondere eine Anfahrfunktionalität bereitstellt. Als ein vorgeschaltetes Modul ist beispielsweise ein Drehmomentwandler oder eine nasse Anfahrkupplung denkbar. Grundsätzlich kann das zum Anfahren vorgesehene Modul aber auch in den Getrieberadsatz 38a integriert sein.

Zur Ausleitung eines übersetzten Antriebsmoments weist das Mehrstufengetriebe eine Getriebeausgangswelle 41a auf. Die Getriebeausgangswelle 41a ist in dem von dem Verbrennungsmotor ausgehenden Kraftfluss nach dem Getrieberadsatz 38a und vor den Antriebsrädern angeordnet. Die Getriebeausgangswelle 41a verbindet den Getrieberadsatz 38a antriebstechnisch mit den Antriebsrädern des Kraftfahrzeugs. Der Getriebeausgangswelle 41a kann ein nicht näher dargestelltes Modul nachgeschaltet sein, mittels dem das aus dem Getrieberadsatz 38a ausgeleitete Antriebsmoment auf die Antriebsräder verteilt werden kann, wie beispielsweise ein Planetenradgetriebe, das für einen Drehzahlausgleich zwischen den Antriebsrädern vorgesehen ist, oder eine Allradantriebseinheit, die das Antriebsmoment auf zwei verschiedene Antriebsachsen verteilt. Die Getriebeeingangswelle 40a und die Getriebeausgangswelle 41a können grundsätzlich beliebig zueinander angeordnet sein.

Der Getrieberadsatz 38a weist vier Planetenradstufen P1a, P2a, P3a, P4a auf, die zur Schaltung der Getriebegänge wirkungsmäßig miteinander verbunden sind. Die erste Planetenradstufe P1a, die zweite Planetenradstufe P2a, die dritte Planetenradstufe P3a und die vierte Planetenradstufe P4a sind hintereinander entlang einer Hauptrotationsachse 42a angeordnet. Eine Rotationsachse der Getriebeeingangswelle 40a fällt mit der Hauptrotationsachse 42a zusammen. Sämtliche Planetenradstufen P1a, P2a, P3a, P4a des Getrieberadsatzes 38a weisen einen Einfachplanetenradsatz auf. Die Bezeichnungen "erste", "zweite", "dritte" und "vierte" kennzeichnen eine axiale Reihenfolge der Planetenradstufen P1a, P2a, P3a, P4a ausgehend von dem Verbrennungsmotor. Demnach ist die erste Planetenradstufe P1a im Vergleich zu den anderen Planetenradstufen P2a, P3a, P4a an erster axialer Position, die zweite Planetenradstufe P2a im Vergleich zu den anderen Planetenradstufen P1a, P3a, P4a an zweiter axialer Position, die dritte Planetenradstufe P3a im Vergleich zu den anderen Planetenradstufen P1a, P2a, P4a an dritter axialer Position und die vierte Planetenradstufe P4a im Vergleich zu den anderen Planetenradstufen P1a, P2a, P3a an vierter axialer Position angeordnet.

Im Folgenden werden die vier Planetenradstufen P1a, P2a, P3a, P4a näher beschrieben. Die vier Planetenradstufen P1a, P2a, P3a, P4a weisen jeweils ein Sonnenrad, einen Planetenradträger und ein Hohlrad auf. Dabei sollen zur Vereinfachung unter einem "ersten bis vierten Planetenradträger", einem "ersten bis vierten Sonnenrad" und einem "ersten bis vierten Hohlrad" ein der ersten bis vierten Planetenradstufe zugeordneter Planetenradträger bzw. ein Sonnenrad oder ein Hohlrad verstanden werden, d.h. beispielsweise, dass unter dem ersten Planetenradträger ein Planetenradträger der ersten Planetenradstufe verstanden werden soll.

Die erste Planetenradstufe P1a ist eingangsseitig angeordnet. Die erste Planetenradstufe P1a umfasst ein erstes Sonnenrad P11a, ein erstes Hohlrad P13a und einen ersten Planetenradträger P12a. Der erste Planetenradträger P12a führt Planetenräder P14a der ersten Planetenradstufe P1a auf einer Kreisbahn. Die Planetenräder P14a kämmen mit dem ersten Sonnenrad P11a und mit dem ersten Hohlrad P13a. Die Planetenräder P14a sind drehbar auf dem ersten Planetenradträger P12a gelagert.

Die zweite Planetenradstufe P2a ist mittig eingangsseitig angeordnet. Die zweite Planetenradstufe P2a umfasst ein zweites Sonnenrad P21a, ein zweites Hohlrad P23a und einen zweiten Planetenradträger P22a. Der zweite Planetenradträger P22a führt Planetenräder P24a der zweiten Planetenradstufe P2a auf einer Kreisbahn. Die Planetenräder P24a kämmen mit dem zweiten Sonnenrad P21a und mit dem zweiten Hohlrad P23a. Die Planetenräder P24a sind drehbar auf dem zweiten Planetenradträger P22a gelagert.

Die dritte Planetenradstufe P3a ist mittig ausgangsseitig angeordnet. Die dritte Planetenradstufe P3a umfasst ein drittes Sonnenrad P31a, ein drittes Hohlrad P33a und einen dritten Planetenradträger P32a. Der dritte Planetenradträger P32a führt Planetenräder P34a der dritten Planetenradstufe P3a auf einer Kreisbahn. Die Planetenräder P34a kämmen mit dem dritten Sonnenrad P31a und mit dem dritten Hohlrad P33a. Die Planetenräder P34a sind drehbar auf dem dritten Planetenradträger P32a gelagert.

Die vierte Planetenradstufe P4a ist ausgangsseitig angeordnet. Die vierte Planetenradstufe P4a umfasst ein viertes Sonnenrad P41a, ein viertes Hohlrad P43a und einen vierten Planetenradträger P42a. Der vierte Planetenradträger P42a führt Planetenräder P44a der vierten Planetenradstufe P4a auf einer Kreisbahn. Die Planetenräder P44a kämmen mit dem vierten Sonnenrad P41a und mit dem vierten Hohlrad P43a. Die Planetenräder P44a sind drehbar auf dem vierten Planetenradträger P42a gelagert.

Das erste Hohlrad P13a ist permanent drehfest mit dem zweiten Planetenradträger P22a verbunden. Das zweite Hohlrad P23a ist permanent drehfest mit dem dritten Sonnenrad P31a und permanent drehfest mit dem vierten Sonnenrad P41a verbunden. Das dritte Sonnenrad P31a und das vierte Sonnenrad P41a sind permanent drehfest miteinander verbunden. Zur Einleitung des von dem Verbrennungsmotor bereitgestellten Antriebsmoments ist die erste Planetenradstufe P1a und die vierte Planetenradstufe P4a jeweils als eine Eingangsstufe ausgebildet. Zur Ausbildung der erste Planetenradstufe P1a als Eingangsstufe ist das erste Sonnenrad P11a permanent drehfest mit der Getriebeeingangswelle 40a verbunden. Zur Ausbildung der vierten Planetenradstufe P4a als Eingangsstufe ist der vierte Planetenradträger P42a permanent drehfest mit der Getriebeeingangswelle 40a verbunden. Zur Ausleitung des von dem Getrieberadsatz 38a übersetzten Antriebsmoments ist die dritte Planetenradstufe P3a und die vierte Planetenradstufe P4a jeweils als eine Ausgangsstufe ausgebildet. Zur Ausbildung der dritten Planetenradstufe P3a als Ausgangsstufe ist der dritte Planetenradträger P32a permanent drehfest mit der Getriebeausgangswelle 41a verbunden. Zur Ausbildung der vierten Planetenradstufe P4a als Ausgangsstufe ist das vierte Hohlrad P43a drehfest mit der Getriebeausgangswelle 41a verbindbar.

Zur Schaltung der Getriebegänge weist der Getrieberadsatz 38a sechs Kopplungsvorrichtungen S1a, S2a, S3a, S4a, S5a, S6a auf. Die Kopplungsvorrichtungen S1a, S2a, S3a, S4a, S5a, S6a sind jeweils als eine Schaltvorrichtung ausgebildet, die zur Schaltung der Getriebegänge vorgesehen sind. Die Kopplungsvorrichtungen S1a, S2a, S3a, S4a, S5a, S6a sind dazu vorgesehen, entweder wahlweise zwei drehbare Getriebeelemente drehfest miteinander zu verbinden und voneinander zu trennen oder wahlweise ein drehbares Getriebeelement drehfest mit dem Getriebegehäuse 39a zu verbinden oder von diesem zu trennen. Ein Getriebeelement ist dabei ein Sonnenrad P11a, P21a, P31a, P41a, ein Planetenradträger P12a, P22a, P32a, P42a oder ein Hohlrad P13a, P23a, P33a, P43a.

Die Kopplungsvorrichtungen S1a, S2a, S3a, S4a, S5a, S6a übertragen in den Getriebegängen unterschiedliche Drehmomente. Der Getrieberadsatz 38a definiert für die Kopplungsvorrichtungen S1a, S2a, S3a, S4a, S5a, S6a Drehmomentfaktoren in den Getriebegängen. Durch die Drehmomentfaktoren sind in den Getriebegängen von den Kopplungsvorrichtungen S1a, S2a, S3a, S4a, S5a, S6a übertragene Drehmomente in dem Getrieberadsatz 38a definiert. Die Drehmomentfaktoren sind von einer Position der Kopplungsvorrichtungen S1a, S2a, S3a, S4a, S5a, S6a in dem Getrieberadsatz 38a abhängig. Die Drehmomente, die von den Kopplungsvorrichtungen S1a, S2a, S3a, S4a, S5a, S6a übertragen werden, sind von einem geschalteten Getriebegang, dem Drehmomentfaktor und einem Antriebsmoment abhängig. Die sechs Kopplungsvorrichtungen S1a, S2a, S3a, S4a, S5a, S6a weisen jeweils ein Gesamtauslegungsmoment auf. Die jeweiligen Gesamtauslegungsmomente richten sich nach einem maximalen zu übertragenden Drehmoment von der jeweiligen Kopplungsvorrichtung S1a, S2a, S3a, S4a, S5a, S6a bei den zugehörigen Getriebegängen. Die Gesamtauslegungsmomente sind an die Getriebegänge angepasst und können sich von Kopplungsvorrichtung S1a, S2a, S3a, S4a, S5a, S6a zu Kopplungsvorrichtung S1a, S2a, S3a, S4a, S5a, S6a unterscheiden.

Die drei Kopplungsvorrichtungen S1a, S3a, S6a sind jeweils als eine Kupplung ausgebildet. Sie weisen jeweils ein erstes drehbares Kopplungselement S11a, S31a, S61a und ein zweites drehbares Kopplungselement S12a, S32a, S62a auf. Die drei Kopplungsvorrichtungen S1a, S3a, S6a sind jeweils dazu vorgesehen, ihre beiden drehbaren Kopplungselemente S11a, S12a, S31a, S32a, S61a, S62a drehfest miteinander zu verbinden.

Die drei Kopplungsvorrichtungen S2a, S4a, S5a sind jeweils als eine Bremse ausgebildet. Sie weisen jeweils ein drehbares Kopplungselement S21a, S41a, S51a und ein feststehendes, gehäusefestes Kopplungselement S22a, S42a, S52a auf. Die Kopplungsvorrichtungen S2a, S4a, S5a sind jeweils dazu vorgesehen, ihr drehbares Kopplungselement S21a, S41a, S51a und ihr feststehendes Kopplungselement S22a, S42a, S52a drehfest miteinander zu verbinden. Sie sind jeweils dazu vorgesehen, ihr drehbares Kopplungselement S21a, S41a, S51a gehäusefest und damit drehfest mit dem Getriebegehäuse 39a zu verbinden.

Die erste Kopplungsvorrichtung S1a weist das erste drehbare Kopplungselement S11a und das zweite drehbare Kopplungselement S12a auf. Das erste drehbare Kopplungselement S11a der ersten Kopplungsvorrichtung S1a ist permanent drehfest mit der Getriebeeingangswelle 40a verbunden. Das zweite drehbare Kopplungselement S12a der ersten Kopplungsvorrichtung S1a ist permanent drehfest mit dem drehbaren Kopplungselement S21a der zweiten Kopplungsvorrichtung S2a verbunden. Das zweite drehbare Kopplungselement S12a der ersten Kopplungsvorrichtung S1a ist weiter permanent drehfest mit dem ersten Planetenradträger P12a verbunden. Die erste Kopplungsvorrichtung S1a ist dazu vorgesehen, den ersten Planetenradträger P12a drehfest mit der Getriebeeingangswelle 40a zu verbinden.

Die zweite Kopplungsvorrichtung S2a weist das drehbare Kopplungselement S21a und das feststehende Kopplungselement S22a auf. Das drehbare Kopplungselement S21a der zweiten Kopplungsvorrichtung S2a ist permanent drehfest mit dem ersten Planetenradträger P12a verbunden. Ferner ist das drehbare Kopplungselement S21a der zweiten Kopplungsvorrichtung S2a permanent drehfest mit dem ersten drehbaren Kopplungselement S31a der dritten Kopplungsvorrichtung S3a verbunden. Das feststehende Kopplungselement S22a der zweiten Kopplungsvorrichtung S2a ist permanent drehfest mit dem Getriebegehäuse 39a verbunden. Das feststehende Kopplungselement S22a der zweiten Kopplungsvorrichtung S2a ist einstückig mit dem Getriebegehäuse 39a ausgebildet. Die zweite Kopplungsvorrichtung S2a ist dazu vorgesehen, den ersten Planetenradträger P12a gehäusefest zu verbinden.

Die dritte Kopplungsvorrichtung S3a weist das erste drehbare Kopplungselement S31a und das zweite drehbare Kopplungselement S32a auf. Das erste drehbare Kopplungselement S31a der dritten Kopplungsvorrichtung S3a ist permanent drehfest mit dem ersten Planetenradträger P12a verbunden. Das zweite drehbare Kopplungselement S32a der dritten Kopplungsvorrichtung S3a ist permanent drehfest mit dem zweiten Hohlrad P23a verbunden. Das zweite drehbare Kopplungselement S32a der dritten Kopplungsvorrichtung S3a ist weiter permanent drehfest mit dem dritten Sonnenrad P31a und permanent drehfest mit dem vierten Sonnenrad P41a verbunden. Die dritte Kopplungsvorrichtung S3a ist dazu vorgesehen, den ersten Planetenradträger P12a, das zweite Hohlrad P23a, das dritte Sonnenrad P31a und das vierte Sonnenrad P41a drehfest miteinander zu verbinden.

Die vierte Kopplungsvorrichtung S4a weist das drehbare Kopplungselement S41a und das feststehende Kopplungselement S42a auf. Das drehbare Kopplungselement S41a der vierten Kopplungsvorrichtung S4a ist permanent drehfest mit dem zweiten Sonnenrad P21a verbunden. Das feststehende Kopplungselement S42a der vierten Kopplungsvorrichtung S4a ist permanent drehfest mit dem Getriebegehäuse 39a verbunden. Die vierte Kopplungsvorrichtung S4a ist dazu vorgesehen, das zweite Sonnenrad P21a gehäusefest zu verbinden.

Die fünfte Kopplungsvorrichtung S5a weist das drehbare Kopplungselement S51a und das feststehende Kopplungselement S52a auf. Das drehbare Kopplungselement S51a der fünften Kopplungsvorrichtung S5a ist permanent drehfest mit dem dritten Hohlrad P33a verbunden. Das feststehende Kopplungselement S52a der fünften Kopplungsvorrichtung S5a ist permanent drehfest mit dem Getriebegehäuse 39a verbunden Die fünfte Kopplungsvorrichtung S5a ist dazu vorgesehen, das dritte Hohlrad P33a gehäusefest zu verbinden.

Die sechste Kopplungsvorrichtung S6a weist das erste drehbare Kopplungselement S61a und das zweite drehbare Kopplungselement S62a auf. Das erste drehbare Kopplungselement S61a der sechsten Kopplungsvorrichtung S6a ist permanent drehfest mit dem vierten Hohlrad P43a verbunden. Das zweite drehbare Kopplungselement S62a der sechsten Kopplungsvorrichtung S6a ist permanent drehfest mit dem dritten Planetenradträger P32a verbunden. Das zweite drehbare Kopplungselement S62a der sechsten Kopplungsvorrichtung S6a ist weiter permanent drehfest mit der Getriebeausgangswelle 41a verbunden. Die sechste Kopplungsvorrichtung S6a ist dazu vorgesehen, das vierte Hohlrad P43a, den dritten Planetenradträger P32a und die Getriebeausgangswelle 41a drehfest miteinander zu verbinden.

Die erste, dritte, vierte, fünfte und sechste Kopplungsvorrichtung S1a, S3a, S4a, S5a, S6a weisen zur drehfesten Verbindung ihrer Kopplungselemente S11a, S12a, S31a, S32a, S41a, S42a, S51a, S52a, S61a, S62a jeweils lediglich eine Reibschlusseinheit auf. Die Reibschlusseinheiten umfassen jeweils ein Lamellenpaket.

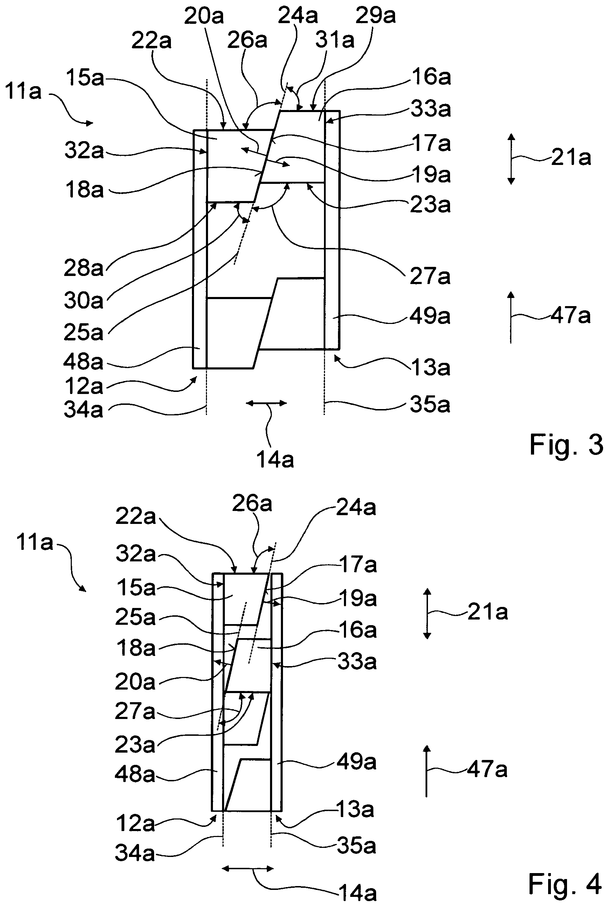

Die zweite Kopplungsvorrichtung S2a ist kombiniert ausgebildet (vgl. Fig. 2). Die zweite Kopplungsvorrichtung S2a weist eine Reibschlusseinheit 10a und eine im Kraftfluss parallel zur Reibschlusseinheit 10a geschaltete Formschlusseinheit 11a auf. Die Reibschlusseinheit 10a und die parallel geschaltete Formschlusseinheit 11a sind jeweils dazu vorgesehen, das drehbare Kopplungselement S21a der zweiten Kopplungsvorrichtung S2a gehäusefest und damit drehfest mit dem Getriebegehäuse 39a zu verbinden. Die zweite Kopplungsvorrichtung S2a ist als eine kombinierte Kopplungsvorrichtung ausgebildet. Sie ist der ersten Planetenradstufe P1a zugeordnet. Die erste Planetenradstufe P1a ist als eine der kombinierten Kopplungsvorrichtung S2a zugeordnete Planetenradstufe ausgebildet. Die Reibschlusseinheit 10a und die Formschlusseinheit 11a der zweiten Kopplungsvorrichtung S2a sind jeweils wirkungsmäßig zwischen dem drehbaren Kopplungselement S21a und dem Getriebegehäuse 39a angeordnet. Die Formschlusseinheit 11a ist schematisiert in den Figuren 3 und 4 dargestellt, wobei in der Figur 3 eine Zahn-auf-Zahnstellung und in der Figur 4 ein geschlossener Zustand, in dem die Formschlusselemente 12a, 13a vollständig ineinander eingerückt sind, gezeigt ist. Die Formschlusseinheit 11a ist in den Figuren 3 und 4 in einer radial orientierten Blickrichtung dargestellt.

Die Reibschlusseinheit 10a der zweiten Kopplungsvorrichtung S2a überträgt das an dem ersten Planetenradträger P12a anliegende Drehmoment in den geschalteten achten Vorwärtsgetriebegang und in dem geschalteten neunten Vorwärtsgetriebegang. Die Formschlusseinheit 11a der zweiten Kopplungsvorrichtung S2a überträgt das an dem ersten Planetenradträger P12a anliegende Drehmoment lediglich in dem geschalteten Rückwärtsgetriebegang. Alternativ oder zusätzlich kann die Formschlusseinheit auch im achten und neunten Vorwärtsgang das anliegende Drehmoment übertragen, wenn der Haltedruck an der Reibschlusseinheit abgesenkt wird. Die Reibschlusseinheit 10a und die Formschlusseinheit 11a der zweiten Kopplungsvorrichtung S2a weisen jeweils ein Auslegungsmoment auf. Das Auslegungsmoment der Reibschlusseinheit 10a und das Auslegungsmoment der Formschlusseinheit 11a sind unterschiedlich. Das Auslegungsmoment der Reibschlusseinheit 10a ist kleiner als das Gesamtauslegungsmoment der zweiten Kopplungsvorrichtung S2a. Das Auslegungsmoment der Formschlusseinheit 11a entspricht dem Gesamtauslegungsmoment der zweiten Kopplungsvorrichtung S2a. Somit ist das Auslegungsmoment der Reibschlusseinheit 10a kleiner als das Auslegungsmoment der Formschlusseinheit 11a.

Die zweite Kopplungsvorrichtung S2a überträgt in dem geschalteten Rückwärtsgetriebegang ein Drehmoment, das größer ist als das Auslegungsmoment der Reibschlusseinheit 10a und in den geschalteten achten und neunten Vorwärtsgetriebegang ein Drehmoment, das kleiner ist als das Auslegungsmoment der Reibschlusseinheit 10a. Die Reibschlusseinheit 10a überträgt dabei in dem achten und neunten Vorwärtsgetriebegang, in dem das anliegende Drehmoment kleiner ist als das Auslegungsmoment der Reibschlusseinheit 10a, das anliegende Drehmoment vollständig. In diesem Ausführungsbeispiel überträgt die Formschlusseinheit 11a in dem Rückwärtsgetriebegang, in dem das anliegende Drehmoment größer ist als das Auslegungsmoment der Reibschlusseinheit 10a, das Drehmoment ebenfalls vollständig. Die Reibschlusseinheit 10a stützt ein Schubmoment und die Formschlusseinheit 11a stützt ein Zugmoment ab. Grundsätzlich ist es auch denkbar, dass die Formschlusseinheit 11a in zumindest einem der Getriebegänge, in denen das anliegende Drehmoment größer ist als das Auslegungsmoment der Reibschlusseinheit 10a, lediglich ein Überschussmoment überträgt. Dabei ist das Überschussmoment ungefähr eine Differenz zwischen dem anliegenden Drehmoment und dem Auslegungsmoment der Reibschlusseinheit 10a.

Die Reibschlusseinheit 10a der zweiten Kopplungsvorrichtung S2a ist als eine Lamellenbremse ausgebildet. Die Reibschlusseinheit 10a umfasst zur drehfesten Verbindung ihrer Kopplungselemente S21a, S22a ein Lamellenpaket. Ferner weist die Reibschlusseinheit 10a der zweiten Kopplungsvorrichtung S2a einen Außenlamellenträger, der permanent drehfest mit dem Getriebegehäuse 39a verbunden ist, und einen Innenlamellenträger, der permanent drehfest mit dem drehbaren Kopplungselement S21a verbunden ist, auf. Der Innenlamellenträger der zweiten Kopplungsvorrichtung S2a ist permanent drehfest mit dem Planetenradträger P12a der ersten Planetenradstufe P1a verbunden. Die Reibschlusseinheit 10a umfasst erste Reibschlusselemente 36a und zweite Reibschlusselemente 37a. Die ersten Reibschlusselemente 36a sind permanent drehfest mit dem drehbaren Kopplungselement S21a der zweiten Kopplungsvorrichtung S2a verbunden. Die ersten Reibschlusselemente 36a sind als Innenlamellen ausgebildet. Die zweiten Reibschlusselemente 37a sind permanent drehfest mit dem feststehenden Kopplungselement S22a verbunden. Sie sind damit permanent drehfest mit dem Getriebegehäuse 39a verbunden. Dabei sind die zweiten Reibschlusselemente 37a axial verschiebbar zu dem feststehenden Kopplungselement S22a angeordnet. Grundsätzlich kann die Reibschlusseinheit 10a lediglich ein einziges erstes Reibschlusselement 36a und/oder lediglich ein einziges zweites Reibschlusselement 37a aufweisen.

Die Formschlusseinheit 11a der zweiten Kopplungsvorrichtung S2a ist als eine Klauenbremse ausgebildet. Die Formschlusseinheit 11a umfasst ein erstes Formschlusselement 12a und ein zweites Formschlusselement 13a, die formschlüssig miteinander verbindbar sind. Das erste Formschlusselement 12a ist permanent drehfest mit dem drehbaren Kopplungselement S21 der zweiten Kopplungsvorrichtung S2a verbunden. Es ist permanent drehfest mit dem Innenlamellenträger der zweiten Kopplungsvorrichtung S2a verbunden. Die ersten Reibschlusselemente 36a der Reibschlusseinheit 10a und das erste Formschlusselement 12a der Formschlusseinheit 11a sind permanent drehfest miteinander verbunden. Das erste Formschlusselement 12a ist als ein an die ersten Reibschlusselemente 36a permanent angebundenes Formschlusselement ausgebildet. Das erste Formschlusselement 12a ist einstückig mit dem drehbaren Kopplungselement S21a ausgebildet. Das zweite Formschlusselement 13a ist permanent drehfest mit dem feststehenden Kopplungselement S22a verbunden. Es ist damit permanent drehfest mit dem Getriebegehäuse 39a verbunden. Das zweite Formschlusselement 13a ist in einem Einrückvorgang als ein einrückendes Formschlusselement ausgebildet, welches zum Schließen der Formschlusseinheit 11a axial verschoben wird.

Das erste Formschlusselement 12a und das zweite Formschlusselement 13a weisen jeweils eine Klauenverzahnung auf, die korrespondierend zueinander ausgebildet sind. Zur Aufnahme der Klauenverzahnungen weisen die Formschlusselemente 12a, 13a jeweils einen Grundkörper 48a, 49a auf. Die Klauenverzahnung des ersten Formschlusselements 12a ist auf dem Grundkörper 48a fest angebracht. Der Grundkörper 48a ist fest auf dem drehbaren Kopplungselement S21a angebracht. Die Klauenverzahnung des zweiten Formschlusselements 13a ist auf dem Grundkörper 49a fest angebracht. Die Klauenverzahnungen sind jeweils als eine Stirnverzahnung ausgebildet. Sie sind jeweils an einer Stirnseite des entsprechenden Grundkörpers 48a, 49a angeordnet. Die Stirnseiten der Grundkörper 48a, 49a, an denen die Klauenverzahnungen angeordnet sind, sind einander zugewandt. Sie sind axial gerichtet.

Die Formschlusselemente 12a, 13a sind entlang einer axialen Betätigungsrichtung 14a relativ zueinander verschiebbar angeordnet. Das zweite Formschlusselement 13a ist entlang der Betätigungsrichtung 14a relativ zum ersten Formschlusselement 12a und relativ zum Getriebegehäuse 39a axial verschiebbar angeordnet. Das zweite Formschlusselement 13a ist drehfest, aber axial verschiebbar mit dem feststehenden Kopplungselement S22a und damit mit dem Getriebegehäuse 39a verbunden. Die Betätigungsrichtung 14a ist parallel zu der Hauptrotationsachse 42a orientiert.

Die stirnseitige Klauenverzahnung des ersten Formschlusselements 12a weist mehrere Klauen 15a auf, die entlang einer Umfangsrichtung 21a des ersten Formschlusselements 12a versetzt zueinander angeordnet sind. In den Figuren 3 und 4 ist dabei lediglich eine der Klauen 15a mit einem Bezugszeichen versehen. Die stirnseitige Klauenverzahnung des zweiten Formschlusselements 13a weist mehrere Klauen 16a auf, die entlang einer Umfangsrichtung 21a des zweiten Formschlusselements 13a versetzt zueinander angeordnet sind. In den Figuren 3 und 4 ist dabei lediglich eine der Klauen 16a mit einem Bezugszeichen versehen.

Die Klauen 15a des ersten Formschlusselements 12a sind analog zueinander ausgebildet, weswegen lediglich die mit dem Bezugszeichen versehene Klaue 15a des ersten Formschlusselements 12a näher beschrieben wird. Die Klaue 15a ist kopfseitig angeschrägt. Die Klaue 15a weist eine dem zweiten Formschlusselement 13a zugewandte Kopffläche 17a auf, die schräg zur Betätigungsrichtung 14a orientiert ist. Die Kopffläche 17a ist dazu vorgesehen, bei einer Zahn-auf-Zahnstellung eine korrespondierende Klaue 16a des zweiten Formschlusselements 13a zu kontaktieren. Die Kopffläche 17a ist eben ausgebildet.

Die Kopffläche 17a weist Flächennormalen 19a auf, die schräg zur Betätigungsrichtung 14a orientiert sind. Die Flächennormalen 19a weisen jeweils eine axial gerichtete Richtungskomponente größer als Null, eine in Umfangsrichtung 21a gerichtete Richtungskomponente größer als Null und eine radial gerichtete Richtungskomponente gleich Null auf. Lediglich die axial gerichtete Richtungskomponente und die in Umfangsrichtung 21a gerichtete Richtungskomponente der Flächennormalen 19a der Kopffläche 17a sind größer als Null. Die Flächennormalen 19a weisen damit jeweils eine parallel zur Umfangsrichtung 21a orientierte Richtungskomponente, die größer als Null ist, und eine parallel zur Betätigungsrichtung 14a orientierte Richtungskomponente, die größer als Null ist, auf. Eine senkrecht zur Umfangsrichtung 21a und senkrecht zur Betätigungsrichtung 14a orientierte Richtungskomponente der Flächennormalen 19 ist dabei gleich Null. Die Kopffläche 17a ist damit axial und in Umfangsrichtung 21a gerichtet. Die Flächennormalen 19a zeigen in Richtung des zweiten Formschlusselements 13a. Sie zeigen in eine Öffnungsrichtung, in die das zweite Formschlusselement 13a zum Öffnen der Formschlusseinheit 11a axial verschoben werden muss.

Die Klaue 15a weist eine Kopplungsflanke 22a auf, die mit einer durch die Kopffläche 17a der Klaue 15a definierten Ebene 24a einen stumpfen Winkel 26a und damit einen Winkel 26a größer als 90° einschließt. Die Kopplungsflanke 22a ist senkrecht zur Umfangsrichtung 21a orientiert. Die Kopplungsflanke 22a ist senkrecht zu einer Ebene, die senkrecht zur Betätigungsrichtung 14a orientiert ist, angeordnet. Die Kopplungsflanke 22a ist senkrecht zu einer tangentialen Drehrichtung, in die das Formschlusselement 12a während eines Betriebs dreht, orientiert. Die Drehrichtung ist in Umfangsrichtung 21a gerichtet. Die Kopplungsflanke 22a weist Flächennormalen auf, die jeweils parallel zur Umfangsrichtung 21a orientiert sind. Die Kopplungsflanke 22a der Klaue 15a schließt mit einer am Klauengrund 32a der Klaue 15a angeordneten Ebene 34a, die senkrecht zur Betätigungsrichtung 14a orientiert ist, einen rechten Winkel und damit einen Winkel von 90° ein. Die Klaue 15a ist mit seinem Klauengrund 32a an dem Grundkörper 48a des ersten Formschlusselements 12a angeordnet.

In dem geschlossenen Zustand der Formschlusseinheit 11a kontaktiert die Klaue 15a mit seiner Kopplungsflanke 22a formschlüssig eine korrespondierende Klaue 16a des zweiten Formschlusselements 13a, wodurch ein Drehmoment zwischen den zwei Formschlusselementen 12a, 13a übertragbar ist.

Die Klaue 15a weist weiter eine der Kopplungsflanke 22a gegenüberliegende Flanke 28a auf, die mit der durch die Kopffläche 17a der Klaue 15a definierten Ebene 24a einen spitzen Winkel 30a und damit einen Winkel 30a kleiner 90° einschließt. Die Kopplungsflanke 22a und die Flanke 28a sind parallel zueinander angeordnet. Die der Kopplungsflanke 22a gegenüberliegende Flanke 28a ist in die Umfangsrichtung 21a gerichtet. Die der Kopplungsflanke 22a gegenüberliegende Flanke 28a schließt mit der am Klauengrund 32a angeordneten Ebene 34a, die senkrecht zur Betätigungsrichtung 14a orientiert ist, einen rechten Winkel und damit einen Winkel von 90° ein. Die Kopplungsflanke 22a der Klaue 15a und die der Kopplungsflanke 22a gegenüberliegende Flanke 28a der Klaue 15a weisen zueinander unterschiedliche axiale Erstreckungen auf. Die axiale Erstreckung der Kopplungsflanke 22a der Klaue 15a ist größer als die axiale Erstreckung der der Kopplungsflanke 22a gegenüberliegenden Flanke 28a der Klaue 15a.

Die der Kopplungsflanke 22a gegenüberliegende Flanke 28a der Klaue 15a ist entgegengesetzt zur Kopplungsflanke 22a der Klaue 15a gerichtet. Sie weist Flächennormalen auf, die jeweils parallel zur Umfangsrichtung 21a orientiert sind. Die Kopplungsflanke 22a und die Flanke 28a sind einander abgewandt. Die Flächennormalen der Kopplungsflanke 22a und die Flächennormalen der der Kopplungsflanke 22a gegenüberliegenden Flanke 28a sind entgegengesetzt zueinander angeordnet.

Die Kopffläche 17a, die Kopplungsflanke 22a und die Flanke 28a sind als Oberflächen der Klaue 15a ausgebildet. Die Kopffläche 17a ist zwischen der Kopplungsflanke 22a und der Flanke 28a angeordnet. Die durch die Kopffläche 17a der Klaue 15a definierte Ebene 24a und die am Klauengrund 32a der Klaue 15a angeordnete Ebene 34a sind schräg zueinander angeordnet. Sie schneiden sich in einer Schnittlinie.

In einem Zugbetrieb des Kraftfahrzeugs rotiert das erste Formschlusselement 12a bei geöffneter zweiter Kopplungsvorrichtung S2a in eine Drehrichtung 47a. Die Kopplungsflanke 22a der Klaue 15a des ersten Formschlusselements 12a ist in die Drehrichtung 47a gerichtet. Die Flächennormalen der Kopplungsflanke 22a der Klaue 15a zeigen in die Drehrichtung 47a. Die der Kopplungsflanke 22a gegenüberliegende Flanke 28a der Klaue 15a des ersten Formschlusselements 12a ist entgegengesetzt zur Drehrichtung 47a gerichtet. Die Flächennormalen der der Kopplungsflanke 22a gegenüberliegenden Flanke 28a der Klaue 15a zeigen entgegengesetzt zur Drehrichtung 47a.

Die Klauen 16a des zweiten Formschlusselements 13a sind analog zur Klaue 15a des ersten Formschlusselements 12a ausgebildet, weswegen lediglich die mit dem Bezugszeichen versehene Klaue 16a des zweiten Formschlusselements 13a nur kurz beschrieben wird. Die Klaue 16a weist eine dem ersten Formschlusselement 12a zugewandte Kopffläche 18a auf, die schräg zur Betätigungsrichtung 14a orientiert ist. Die Kopffläche 18a ist dazu vorgesehen, bei der Zahn-auf-Zahnstellung eine der korrespondierenden Klauen 15a des ersten Formschlusselements 12a zu kontaktieren. In der Zahn-auf-Zahnstellung kontaktieren sich die Kopfflächen 17a der Klauen 15a des ersten Formschlusselements 12a und die Kopfflächen 18a der Klauen 16a des zweiten Formschlusselements 13a.

Die Kopffläche 18a ist eben ausgebildet. Die Kopffläche 18a weist Flächennormalen 20a auf, die jeweils eine axial gerichtete Richtungskomponente größer als Null, eine in Umfangsrichtung 21a gerichtete Richtungskomponente größer als Null und eine radial gerichtete Richtungskomponente gleich Null aufweisen. Die Kopffläche 17a der Klaue 15a des ersten Formschlusselements 12a und die Kopffläche 18a der Klaue 16a des zweiten Formschlusselements 13a sind einander zugewandt. Die Flächennormalen 20a zeigen in Richtung erstes Formschlusselement 12a. Die Flächennormalen 19a der Kopffläche 17a und die Flächennormalen 20a der Kopffläche 18a sind entgegengesetzt zueinander orientiert. Die Flächennormalen 20a der Kopffläche 18a zeigen in Richtung des ersten Formschlusselements 12a. Sie zeigen in eine Schließrichtung, in die das zweite Formschlusselement 13a zum Schließen der Formschlusseinheit 11a axial verschoben werden muss.

Die Klaue 16a weist eine Kopplungsflanke 23a auf, die mit einer durch die Kopffläche 18a der Klaue 16a definierten Ebene 25a einen stumpfen Winkel 27a einschließt. In dem geschlossenen Zustand der Formschlusseinheit 11a kontaktieren sich die Kopplungsflanken 22a der Klauen 15a des ersten Formschlusselements 12a und die Kopplungsflanken 23a der Klauen 16a des zweiten Formschlusselements 13a. Die Kopplungsflanke 23a der Klaue 16a schließt mit einer am Klauengrund 33a der Klaue 16a angeordneten Ebene 35a, die senkrecht zur Betätigungsrichtung 14a orientiert ist, einen rechten Winkel ein. Die Klaue 16a ist mit seinem Klauengrund 33a an dem Grundkörper 49a des zweiten Formschlusselements 13a angeordnet. Die Klaue 16a weist eine der Kopplungsflanke 23a gegenüberliegende Flanke 29a auf, die mit der durch die Kopffläche 18a der Klaue 16a definierten Ebene 25a einen spitzen Winkel 31a einschließt.

Die Kopplungsflanke 23a der Klaue 16a des zweiten Formschlusselements 13a ist entgegengesetzt zur Drehrichtung 47a gerichtet. Die Flächennormalen der Kopplungsflanke 23a der Klaue 16a zeigen entgegengesetzt zur Drehrichtung 47a. Die der Kopplungsflanke 23a gegenüberliegende Flanke 29a der Klaue 16a des zweiten Formschlusselements 13a ist in die Drehrichtung 47a gerichtet. Die Flächennormalen der der Kopplungsflanke 23a gegenüberliegenden Flanke 29a der Klaue 16a zeigen in die Drehrichtung 47a. In dem geschlossenen Zustand der Formschlusseinheit 11a verhindert das zweite Formschlusselement 13a ein Verdrehen des ersten Formschlusselements 12a in die Drehrichtung 47a. In dem geschlossenen Zustand der Kopplungsvorrichtung S2a übertragen die Klauen 15a, 16a im Zugbetrieb des Kraftfahrzeugs ein Lastmoment.

Die Klauen 15a des ersten Formschlusselements 12a weisen einen in Umfangsrichtung 21a gerichteten Abstand zueinander auf, der größer ist als eine in Umfangsrichtung 21a gerichtete Erstreckung der Klauen 16a des zweiten Formschlusselements 13a. Analog weisen die Klauen 16a des zweiten Formschlusselements 13a einen in Umfangsrichtung 21a gerichteten Abstand zueinander auf, der größer ist als eine in Umfangsrichtung 21a gerichtete Erstreckung der Klauen 15a des ersten Formschlusselements 12a. Damit weisen die Klauenverzahnungen ein Umschlagsspiel auf, wodurch ein Risiko eines Ratschens nach einem Auflösen der Zahn-auf-Zahnstellung reduziert wird. In dem geschlossenen Zustand der Formschlusseinheit 11a weisen die der Kopplungsflanke 22a gegenüberliegende Flanke 28a der Klaue 15a des ersten Formschlusselements 12a und die der Kopplungsflanke 23a gegenüberliegende Flanke 29a der Klaue 16a des zweiten Formschlusselements 13a einen in Umfangsrichtung 21a gerichteten Abstand zueinander auf. Ein Verdrehen im Umschlagsspiel der Formschlusselemente 12a, 13a in einem Schubbetrieb des Kraftfahrzeugs wird durch die geschlossene Reibschlusseinheit 10a verhindert. In dem geschlossenen Zustand der Reibschlusseinheit 10a verhindern die ersten Reibschlusselemente 36a ein Verdrehen des ersten Formschlusselements 12a in eine zur Drehrichtung 47a entgegengesetzte Drehrichtung. In dem geschlossenen Zustand der Kopplungsvorrichtung S2a übertragen die Reibschlusselemente 36a, 37a im Schubbetrieb des Kraftfahrzeugs das Lastmoment.

Die Klauen 15a, 16a sind komplementär zueinander ausgebildet oder angeordnet, sodass sie sich bei vollständigem Kontakt der Kopffläche 17a des ersten Formschlusselements 12a und der Kopffläche 18a des zweiten Formschlusselements 13a zu einem Quader ergänzen. In einem Schnitt entlang der Betätigungsrichtung 14a durch die Klauen 15a, 16a weisen diese jeweils eine geometrische Form auf, die aus einem einzigen Dreieck und einem einzigen Rechteck zusammensetzbar ist. Bei dem vollständigen Kontakt der Kopfflächen 17a, 18a liegen sowohl die Kopplungsflanke 22a der Klaue 15a des ersten Formschlusselements 12a und die Flanke 29a der Klaue 16a des zweiten Formschlusselements 13a als auch die Flanke 28a der Klaue 15a des ersten Formschlusselements 12a und die Kopplungsflanke 23a der Klaue 16a des zweiten Formschlusselements 13a in einer Linie.

In dem geschlossenen Zustand der Formschlusseinheit 11a ist die Ebene 24a, die durch die Kopffläche 17a der Klaue 15a des ersten Formschlusselements 12a definiert ist, und die Ebene 25a, die durch die Kopffläche 18a der Klaue 15a des zweiten Formschlusselements 13a definiert ist, parallel versetzt zueinander angeordnet. In dem geschlossenen Zustand der Formschlusseinheit 11a schneidet die Ebene 24a, die durch die Kopffläche 17a der Klaue 15a des ersten Formschlusselements 12a definiert ist, die Kopplungsflanke 23a und die Flanke 29a der Klaue 16a des zweiten Formschlusselements 13a. Die Ebene 25a, die durch die Kopffläche 18a der Klaue 16a des zweiten Formschlusselements 13a definiert ist, schneidet in dem geschlossenen Zustand die Kopplungsflanke 22a und die Flanke 28a der Klaue 15a des ersten Formschlusselements 12a. Sowohl den Klauen 15a des ersten Formschlusselements 12a und dem Grundkörper 49a des zweiten Formschlusselements 13a als auch den Klauen 16a des zweiten Formschlusselements 13a und dem Grundkörper 48a des ersten Formschlusselements 12a fehlt in dem geschlossenen Zustand der Formschlusseinheit 11a ein gegenseitiger Kontakt. Dadurch wird vermieden, dass eine axiale Kraft permanent auf die Formschlusselemente 12a, 13a wirkt. Die axiale Kraft wird dabei über einen Kolbenanschlag abgestützt.

Die Kopfflächen 17a, 18a sind dazu vorgesehen, in der Zahn-auf-Zahnstellung sich gegenseitig flächig zu kontaktieren und aufeinander abzugleiten. Durch eine in die Betätigungsrichtung 14a wirkende Betätigungskraft, die die Kopfflächen 17a, 18a gegeneinander drückt, entsteht durch die angeschrägten Kopfflächen 17a, 18a eine in die Umfangsrichtung 21a wirkende Umfangskraft. Durch die Umfangskraft gleiten die Kopfflächen 17a, 18a aufeinander ab. Durch die Umfangskraft wird die Reibschlusseinheit 10a überdrückt, wodurch sich die ersten Reibschlusselemente 36a und damit das permanent drehfest mit den ersten Reibschlusselementen 36a verbundene erste Formschlusselement 12a relativ zu dem zweiten Formschlusselement 13a verdreht. Dadurch wird die Zahn-auf-Zahnstellung aufgelöst, wodurch die Klauen 15a und die Klauen 16a formschlüssig zwischen einander eingreifen. Die Kopfflächen 17a, 18a sind dabei in der Art ausgebildet oder zueinander angeordnet, dass eine in die Drehrichtung 47a auf das erste Formschlusselement 12a wirkende Umfangskraft entsteht, wodurch sich das erste Formschlusselement 12a beim Überdrücken der Reibschlusseinheit 10a in die Drehrichtung 47a verdreht.

Zur Betätigung der Reibschlusseinheit 10a und der Formschlusseinheit 11a weist die zweite Kopplungsvorrichtung S2a zwei voneinander unabhängige Betätigungseinheiten 43a, 44a auf. Die Reibschlusseinheit 10a und die Formschlusseinheit 11a werden nacheinander betätigt, wobei die Reibschlusseinheit 10a vor der Formschlusseinheit 11a greift. Die Formschlusseinheit 11a wird stets bei geschlossener Reibschlusseinheit 10a geschlossen. Die erste Betätigungseinheit 43a betätigt die Reibschlusseinheit 10a. Die erste Betätigungseinheit 43a weist ein axial bewegliches Betätigungselement 45a auf, das zur drehfesten Verbindung der Kopplungselemente S21a, S22a der zweiten Kopplungsvorrichtung S2a axial gegen das Lamellenpaket der Reibschlusseinheit 10a drückt, wodurch sich Lamellen des Lamellenpakets relativ zueinander axial verschieben bis diese aneinander liegen und die Kopplungselemente S21a, S22a kraftschlüssig miteinander verbunden sind.

Die zweite Betätigungseinheit 44a betätigt die Formschlusseinheit 11a. Die zweite Betätigungseinheit 44a weist ein axial bewegliches Betätigungselement 46a auf, das fest mit dem zweiten Formschlusselement 13a und axial verschiebbar, aber drehfest mit dem feststehenden Kopplungselement S22a und damit mit dem Getriebegehäuse 39a verbunden ist. Zur drehfesten Verbindung der Kopplungselemente S21a, S22a der zweiten Kopplungsvorrichtung S2a bewegt sich das Betätigungselement 46a der zweiten Betätigungseinheit 44a und dadurch das zweite Formschlusselement 13a axial in Richtung des ersten Formschlusselements 12a bis die korrespondierend zueinander ausgebildeten Klauenverzahnungen der Formschlusseinheit 11a der zweiten Kopplungsvorrichtung S2a formschlüssig ineinandergreifen und die Kopplungselemente S21a, S22a formschlüssig miteinander verbunden sind. Die Betätigungseinheiten 43a, 44a sind jeweils hydraulisch ausgebildet. Sie sind innerhalb des Getriebegehäuses 39a angeordnet. Grundsätzlich können die Betätigungseinheiten 43a, 44a aber auch elektrisch oder pneumatisch ausgebildet sein. Weiter ist es grundsätzlich denkbar, dass die zweite Kopplungsvorrichtung S2a zur Betätigung der Reibschlusseinheit 10a und der Formschlusseinheit 11a eine gemeinsame Betätigungseinheit oder zwei voneinander abhängige Betätigungseinheiten aufweist. Ferner ist es grundsätzlich denkbar, dass zusätzlich oder alternativ zumindest eine der anderen Kopplungsvorrichtungen S1a, S3a, S4a, S5a, S6a eine Reibschlusseinheit und eine parallel zu der Reibschlusseinheit geschaltete Formschlusseinheit analog zu der zweiten Kopplungsvorrichtungen S2a aufweist.

In einem Betriebszustand, in dem die zweite Kopplungsvorrichtung S2a ausgehend von einem offenen Zustand in einen geschlossenen Zustand geschaltet wird, wird mittels der ersten Betätigungseinheit 43a zuerst die Reibschlusseinheit 10a und anschließend bei geschlossener Reibschlusseinheit 10a mittels der zweiten Betätigungseinheit 44a die Formschlusseinheit 11a geschlossen. Bei einer Zahn-auf-Zahnstellung und damit bei einem Aufeinandertreffen der Kopfflächen 17a der Klauen 15a des ersten Formschlusselements 12a und der Kopfflächen 18a der Klauen 16a des zweiten Formschlusselements 13a gleiten die schräg zur Betätigungsrichtung 14a orientierten Kopfflächen 17a, 18a aufeinander ab, wodurch aus der Betätigungskraft mit der das zweite Formschlusselement 13a zum Schließen der Formschlusseinheit 11a in Richtung erstes Formschlusselement 12a axial bewegt wird, die Umfangskraft zum Überdrücken der Reibschlusseinheit 10a und damit zum Verdrehen des ersten Formschlusselements 12a erzeugt wird. Dabei wird eine Betätigungskraft der geschlossenen Reibschlusseinheit 10a, in diesem Ausführungsbeispiel ein hydraulischer Betätigungsdruck, reduziert. Ist die Betätigungskraft der geschlossenen Reibschlusseinheit nur so groß, dass das anliegende Lastdrehmoment übertragen wird, muss die Betätigungskraft nicht abgesenkt werden, um eine Zahn-auf-Zahn-Stellung aufzulösen. Die Umfangskraft der Klauenverzahnung erzeugt einen Kraftunterschied, durch welchen die Lamelle bei konstanter Betätigungskraft zum Rutschen gebracht wird. Bei einer bestimmten Umfangskraft wird die Reibschlusseinheit 10a überdrückt, wodurch sich das erste Formschlusselement 12a, und damit das Formschlusselement 12a, welches permanent drehfest mit den ersten Reibschlusselementen 36a der Reibschlusseinheit 10a verbunden ist, in die Drehrichtung 47a verdreht. Durch das Verdrehen des ersten Formschlusselements 12a löst sich die Zahn-auf-Zahnstellung auf und die Formschlusselemente 12a, 13a greifen formschlüssig ineinander ein.

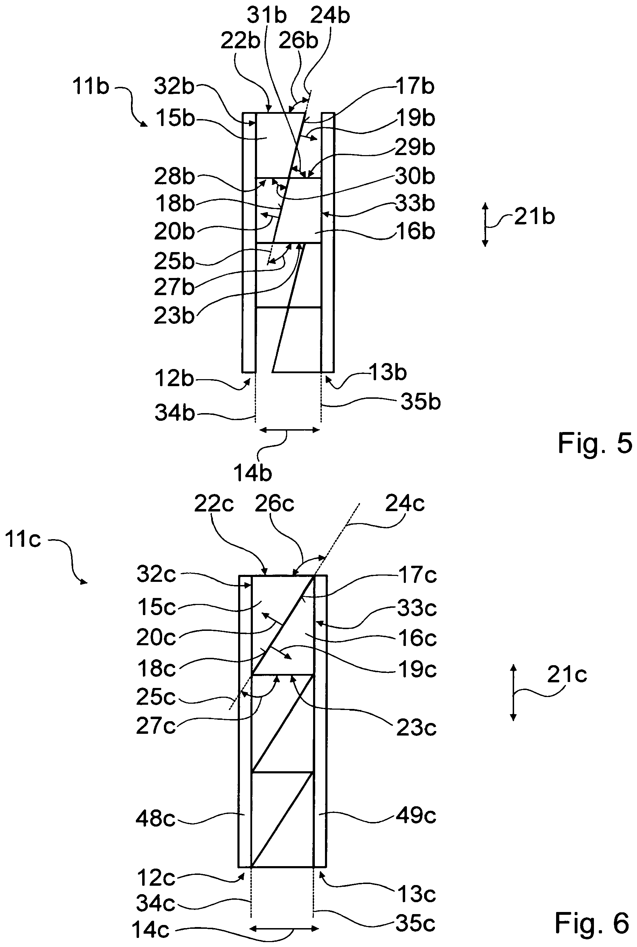

In den Figuren 5 bis 6 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbezeichneter Bauteile, insbesondere in Bezug auf Bauteile mit gleichen Bezugszeichen, grundsätzlich auch auf die Figuren und/oder die Beschreibung der anderen Ausführungsbeispiele, insbesondere des Ausführungsbeispiels in den Figuren 1 bis 4, verwiesen werden kann. Zur Unterscheidung der Ausführungsbeispiele ist der Buchstabe a in den Bezugszeichen des Ausführungsbeispiels in den Figuren 1 bis 4 durch den Buchstaben b und c in den Bezugszeichen der Ausführungsbeispiele in den Figuren 5 und 6 ersetzt.

In der Figur 5 ist ein zweites Ausführungsbeispiel einer in einem geschlossenen Zustand geschalteten Formschlusseinheit 11b einer Kopplungsvorrichtung für ein Kraftfahrzeug dargestellt. Die Kopplungsvorrichtung ist als eine Schaltvorrichtung, die zur Schaltung von Getriebegängen vorgesehen ist, ausgebildet. Sie wird in einem Mehrstufengetriebe des Kraftfahrzeugs verwendet. Die Kopplungsvorrichtung weist neben der Formschlusseinheit 11b eine nicht dargestellte Reibschlusseinheit auf, wobei die Reibschlusseinheit und die Formschlusseinheit 11b parallel zu einander geschaltet sind. Die Formschlusseinheit 11b weist zwei formschlüssig miteinander verbindbare Formschlusselemente 12b, 13b auf, die entlang einer Betätigungsrichtung 14b relativ zueinander verschiebbar angeordnet sind und die jeweils mehrere Klauen 15b, 16b aufweisen. Das erste Formschlusselement 12b ist permanent drehfest mit ersten Reibschlusselementen der Reibschlusseinheit verbunden. Die Klauen 15b, 16b weisen jeweils eine eben ausgebildete Kopffläche 17b, 18b auf, die schräg zur Betätigungsrichtung 14b orientiert ist. Die Kopfflächen 17b, 18b weisen jeweils eine Flächennormale 19b, 20b auf, die jeweils eine in Umfangsrichtung 21b gerichtete Richtungskomponente größer als Null und eine radial gerichtete Richtungskomponente gleich Null aufweisen.

Die Klauen 15b, 16b weisen weiter jeweils eine Kopplungsflanke 22b, 23b auf, die jeweils mit einer durch die zugehörige Kopffläche 17b, 18b definierten Ebene 24b, 25b einen stumpfen Winkel 26b, 27b einschließen. Die Kopplungsflanken 22b; 23b schließen dabei jeweils mit einer am zugehörigen Klauengrund 32b, 33b angeordneten Ebene 34b, 35b, die senkrecht zur Betätigungsrichtung 14b orientiert ist, einen rechten Winkel ein. Ferner umfassen die Klauen 15b, 16b jeweils eine der Kopplungsflanke 22b; 23b gegenüberliegende Flanke 28b, 29b, die jeweils mit der durch die zugehörige Kopffläche 17b, 18b definierten Ebene 24b, 25b einen spitzen Winkel 30b, 31b einschließen.

Im Unterschied zu dem vorherigen Ausführungsbeispiel bilden die Klauen 15b, 16b ein Sägezahnlückenprofil aus. Die Klauen 15b, 16b sind im Vergleich zum vorherigen Ausführungsbeispiel stärker angeschrägt. Sie sind bis zu 45° angeschrägt. In dem geschlossenen Zustand der Formschlusseinheit 11b und damit in einem Zustand, in dem die Kopplungsflanken 22b der Klauen 15b des ersten Formschlusselements 12b und die Kopplungsflanken 23b der Klauen 16b des zweiten Formschlusselements 13b drehmomentübertragend aneinander liegen, sind die Flanken 28b, 29b zumindest im Wesentlichen axial fluchtend zueinander angeordnet. Die Flanke 28b der Klaue 15b des ersten Formschlusselements 12b und die Flanke 29b der Klaue 16b des zweiten Formschlusselements 13b sind in dem geschlossenen Zustand der Formschlusseinheit 11b zumindest im Wesentlichen in einer Linie angeordnet. Die durch die Kopffläche 17b definierte Ebene 24b und die durch die Kopffläche 18b definierte Ebene 25b liegen in dem geschlossenen Zustand der Formschlusseinheit 11b auf- oder ineinander. In dem geschlossenen Zustand der Formschlusseinheit 11b fehlt der Ebene 24b, die durch die Kopffläche 17b der Klaue 15b des ersten Formschlusselements 12b definiert ist, mit der Kopplungsflanke 23 und der Flanke 29b der Klaue 16b des zweiten Formschlusselements 13b eine Schnittlinie. Auch der Ebene 25b, die durch die Kopffläche 18b der Klaue 16b des zweiten Formschlusselements 13b definiert ist, fehlt in dem geschlossenen Zustand der Formschlusseinheit 11b mit der Kopplungsflanke 22b und der Flanke 28b der Klaue 15b des ersten Formschlusselements 12b eine Schnittlinie.

Die Klauen 15b, 16b sind derart ausgebildet, sodass bei einem den Kontakt zwischen den Kopplungsflanken 22b, 23b lösenden Verdrehen der Formschlusselemente 12b, 13b ein Kontakt zwischen den Flanken 28b, 29b verhindert ist. Durch das derartige Verdrehen der Formschlusselemente 12b, 13b liegen die Kopfflächen 17b, 18b aufeinander, ohne dass sich die den Kopplungsflanken 22b; 23b gegenüberliegenden Flanke 28b, 29b zuvor gegenseitig kontaktieren.

Die Klauen 15b des ersten Formschlusselements 12b weisen einen in Umfangsrichtung 21b gerichteten Abstand zueinander auf, der wenigstens ungefähr einer in Umfangsrichtung 21b gerichteten Erstreckung der Klauen 16b des zweiten Formschlusselements 13b entspricht. Analog weisen die Klauen 16b des zweiten Formschlusselements 13b einen in Umfangsrichtung 21b gerichteten Abstand zueinander auf, der wenigstens ungefähr einer in Umfangsrichtung 21b gerichteten Erstreckung der Klauen 15b des ersten Formschlusselements 12b entspricht. Damit fehlt den Formschlusselementen 12b, 13b ein Umschlagspiel.

In der Figur 6 ist ein drittes Ausführungsbeispiel einer in einem geschlossenen Zustand geschalteten Formschlusseinheit 11c einer Kopplungsvorrichtung für ein Kraftfahrzeug dargestellt. Die Kopplungsvorrichtung ist als eine Schaltvorrichtung ausgebildet, die zur Schaltung von Getriebegängen vorgesehen ist. Sie wird in einem Mehrstufengetriebe des Kraftfahrzeugs verwendet. Die Kopplungsvorrichtung weist neben der Formschlusseinheit 11c eine nicht dargestellte Reibschlusseinheit auf, wobei die Reibschlusseinheit und die Formschlusseinheit 11c parallel zu einander geschaltet sind. Die Formschlusseinheit 11c weist zwei formschlüssig miteinander verbindbare Formschlusselemente 12c, 13c auf, die entlang einer Betätigungsrichtung 14c relativ zueinander verschiebbar angeordnet sind und die jeweils mehrere Klauen 15c, 16c aufweisen. Das erste Formschlusselement 12c ist permanent drehfest mit ersten Reibschlusselementen der Reibschlusseinheit verbunden. Die Klauen 15c, 16c weisen jeweils eine eben ausgebildete Kopffläche 17c, 18c auf, die schräg zur Betätigungsrichtung 14c orientiert ist. Die Kopfflächen 17c, 18c weisen jeweils eine Flächennormale 19c, 20c auf, die jeweils eine in Umfangsrichtung 21c gerichtete Richtungskomponente größer als Null und eine radial gerichtete Richtungskomponente gleich Null aufweisen.

Die Klauen 15c, 16c weisen weiter jeweils eine Kopplungsflanke 22c, 23c auf, die jeweils mit einer durch die zugehörige Kopffläche 17c, 18c definierten Ebene 24c, 25c einen stumpfen Winkel 26c, 27c einschließen. Die Kopplungsflanken 22c; 23c schließen dabei jeweils mit einer am zugehörigen Klauengrund 32c, 33c angeordneten Ebene 34c, 35c, die senkrecht zur Betätigungsrichtung 14c orientiert ist, einen rechten Winkel ein.

Im Unterschied zu den vorherigen Ausführungsbeispiel erstrecken sich die Kopfflächen 17c, 18c jeweils bis zu dem zugehörigen Klauengrund 32c, 33c. Die Kopffläche 17c erstreckt sich ausgehend von der Kopplungsflanke 22c der Klaue 15c bis zu dem Klauengrund 32c der Klaue 15c. Analog erstreckt sich die Kopffläche 18c ausgehend von der Kopplungsflanke 23c der Klaue 16c bis zu dem Klauengrund 33c der Klaue 16c. Die Klauen 15c, 16c bilden ein Sägezahnprofil aus. Im Unterschied zu dem vorherigen Ausführungsbeispiel erstrecken sich die Kopfflächen 17c, 18c jeweils bis zu der nächsten Klaue 15c, 16c, sodass eine axiale Lücke zwischen einem Grundkörper 48c, 49c und den Klauen 15c, 16c fehlt. In dem geschlossenen Zustand der Formschlusseinheit 11c und damit in einem Zustand, in dem die Kopplungsflanken 22c der Klauen 15c des ersten Formschlusselements 12c und die Kopplungsflanken 23c der Klauen 16c des zweiten Formschlusselements 13c drehmomentübertragend aneinander liegen, kontaktieren sich die Kopfflächen 17c, 18c vollständig. Die durch die Kopffläche 17c definierte Ebene 24c und die durch die Kopffläche 18c definierte Ebene 25c liegen in dem geschlossenen Zustand der Formschlusseinheit 11c auf- oder ineinander. Die Klauen 15c, 16c sind derart ausgebildet, sodass sich die Kopfflächen 17c, 18c beim Einspuren und in dem geschlossenen Zustand kontaktieren. Die Klauen 15c, 16c weisen in einem Schnitt entlang der Betätigungsrichtung 14c jeweils eine geometrische Form auf, die im Unterschied zu den vorherigen Ausführungsbeispielen aus einem einzigen Dreieck zusammensetzbar ist. Die Klauen 15c, 16c sind in dem Schnitt entlang der Betätigungsrichtung 14c jeweils dreieckförmig ausgebildet.

Im weiteren Unterschied zu den vorherigen Ausführungsbeispielen kontaktieren die Klauen 15c des ersten Formschlusselements 12c in dem geschlossenen Zustand den Grundkörper 49c des zweiten Formschlusselements 13c und die Klauen 16c des zweiten Formschlusselements 13c den Grundkörper 48c des ersten Formschlusselements 12c.

## Patentansprüche

1. Kopplungsvorrichtung für ein Kraftfahrzeug mit einer Reibschlusseinheit (10a) und einer parallel zur Reibschlusseinheit (10a) geschalteten Formschlusseinheit (11a; 11b; 11c), die zumindest zwei formschlüssig miteinander verbindbare Formschlusselemente, erstes Formschlusselement (12a, 12b, 12c) und zweites Formschlusselement (13a; 13b; 13c), aufweist, die entlang einer Betätigungsrichtung (14a; 14b, 14c) relativ zueinander verschiebbar angeordnet sind und die jeweils zumindest eine Klaue (15a, 16a; 15b, 16b; 15c, 16c) aufweisen, wobei zwei voneinander unabhängige Betätigungseinheiten (43a, 44a) zur Betätigung der Reibschlusseinheit (10a) und der Formschlusseinheit (11a) vorgesehen sind, **dadurch gekennzeichnet dass**, die Klauen (15a, 16a; 15b, 16b; 15c, 16c) jeweils zumindest teilweise eine Kopffläche (17a, 18a; 17b, 18b; 17c, 18c) aufweisen, die schräg zur Betätigungsrichtung (14a; 14b, 14c) orientiert ist, und die Klauen (15a, 16a; 15b, 16b; 15c, 16c) jeweils eine Kopplungsflanke (22a, 23a; 22b, 23b; 22c, 23c) aufweisen, die jeweils mit einer durch die zugehörige Kopffläche (17a, 18a; 17b, 18b; 17c, 18c) definierten Ebene (24a, 25a; 24b, 25b; 24c, 25c) einen Winkel (26a, 27a; 26b, 27b; 26c, 27c) einschließen, der größer als 90 ° ist, und
die Klauen (15a, 16a; 15b, 16b) jeweils eine der Kopplungsflanke (22a, 23a; 22b; 23b) gegenüberliegende Flanke (28a, 29a; 28b, 29b) aufweisen, die jeweils mit der durch die zugehörige Kopffläche (17a, 18a; 17b, 18b) definierten Ebene (24a, 25a; 24b, 25b) einen Winkel (30a, 31a; 30b, 31b) einschließen, der kleiner als 90 ° ist.

2. Kopplungsvorrichtung nach Anspruch 1,
**dadurch gekennzeichnet, dass**
die Kopfflächen (17a, 18a; 17b, 18b; 17c, 18c) jeweils zumindest im Wesentlichen eben ausgebildet sind.

3. Kopplungsvorrichtung nach Anspruch 1 oder 2,
**dadurch gekennzeichnet, dass**
die Kopfflächen (17a, 18a; 17b, 18b; 17c, 18c) jeweils zumindest eine Flächennormale (19a, 20a; 19b, 20b; 19c; 20c) mit einer in Umfangsrichtung (21a; 21b; 21c) gerichteten Richtungskomponente größer als Null aufweisen.

4. Kopplungsvorrichtung nach einem der vorhergehenden Ansprüche,
**dadurch gekennzeichnet, dass**
die Kopfflächen (17a, 18a; 17b, 18b; 17c, 18c) jeweils zumindest eine Flächennormale mit einer radial gerichteten Richtungskomponente gleich Null aufweisen.

5. Kopplungsvorrichtung nach Anspruch 1,
**dadurch gekennzeichnet, dass**
die Kopplungsflanken (22a, 23a; 22b; 23b; 22c; 23c) jeweils mit einer am zugehörigen Klauengrund (32a, 33a; 32b, 33b; 32c; 33c) angeordneten Ebene (34a, 35a; 34b, 35b; 34c, 35c), die senkrecht zur Betätigungsrichtung (14a; 14b; 14c) orientiert ist, einen rechten Winkel einschließen.

6. Kopplungsvorrichtung nach Anspruch 5,
**dadurch gekennzeichnet, dass**
die Kopfflächen (17c, 18c) sich jeweils bis zu dem Klauengrund (32c, 33c) erstrecken.

7. Kopplungsvorrichtung nach einem der vorhergehenden Ansprüche,
**dadurch gekennzeichnet, dass**
die Klauen (15a, 16a; 15b, 16b; 15c, 16c) jeweils stirnseitig angeordnet sind.

8. Kopplungsvorrichtung nach einem der vorhergehenden Ansprüche,
**dadurch gekennzeichnet, dass**
die Reibschlusseinheit (10a) zumindest ein Reibschlusselement (36a) aufweist, das permanent drehfest mit einem der Formschlusselemente (12a; 12b; 12c) verbunden

9. Kopplungsvorrichtung nach Anspruch 1,
**dadurch gekennzeichnet, dass**
die erste Betätigungseinheit (43a) die Reibschlusseinheit (10a) betätigt und die zweite Betätigungseinheit (44a) die Formschlusseinheit (11a) betätigt.

10. Kopplungsvorrichtung nach Anspruch 9,
**dadurch gekennzeichnet, dass**
die erste Betätigungseinheit (43a) ein axial bewegliches Betätigungselement (45a) aufweist, das zur drehfesten Verbindung von einem ersten Kopplungselementen (S21a) und einem zweiten feststehenden Kopplungselement (S22a) der Kopplungsvorrichtung axial gegen ein Lamellenpaket der Reibschlusseinheit (10a) drückt, wodurch sich Lamellen des Lamellenpakets relativ zueinander axial verschieben bis diese aneinander liegen und die Kopplungselemente (S21a, S22a) kraftschlüssig miteinander verbunden sind.

11. Kopplungsvorrichtung nach einem der Ansprüche 9 bis 10,
**dadurch gekennzeichnet, dass**
die zweite Betätigungseinheit (44a) ein axial bewegliches Betätigungselement (46a) aufweist, das fest mit dem zweiten Formschlusselement (13a) und axial verschiebbar, aber drehfest mit dem feststehenden Kopplungselement (S22a) und damit mit einem Getriebegehäuse (39a) verbunden ist, wobei zur drehfesten Verbindung der Kopplungselemente (S21a, S22a) der zweiten Kopplungsvorrichtung (S2a) sich das Betätigungselement (46a) der zweiten Betätigungseinheit (44a) und dadurch das zweite Formschlusselement (13a) axial in Richtung des ersten Formschlusselements (12a) bewegen kann bis korrespondierend zueinander ausgebildete Klauenverzahnungen der ersten Formschlusseinheit (11a) der zweiten Kopplungsvorrichtung (S2a) formschlüssig ineinandergreifen und die Kopplungselemente (S21a, S22a) formschlüssig miteinander verbunden sind.

## Claims

1. Coupling device for a motor vehicle, with a frictional engagement unit (10a) and a positive engagement unit (11a; 11b; 11c), which is connected in parallel with the frictional engagement unit (10a) and which comprises at least two positive engagement elements capable of positive connection, i.e. a first positive engagement element (12a, 12b, 12c) and a second positive engagement element (13a; 13b; 13c), which are displaceable relative to each other in an actuating direction (14a; 14b, 14c) and each of which has at least one jaw (15a, 16a; 15b, 16b; 15c, 16c), wherein two mutually independent actuating units (43a, 44a) are provided for the actuation of the frictional engagement unit (10a) and the positive engagement unit (11a),
**characterised in that**
each of the jaws (15a, 16a; 15b, 16b; 15c, 16c) at least partially has a head surface (17a, 18a; 17b, 18b; 17c, 18c), which is oriented at an angle to the actuating direction (14a; 14b, 14c),
**in that** each of the jaws (15a, 16a; 15b, 16b; 15c, 16c) has a coupling flank (22a, 23a; 22b, 23b; 22c, 23c) enclosing with a plane (24a, 25a; 24b, 25b; 24c, 25c) defined by the associated head surface (17a, 18a; 17b, 18b; 17c, 18c) an angle (26a, 27a; 26b, 27b; 26c, 27c) of more than 90°, and
**in that** each of the jaws (15a,16a; 15b, 16b) has a flank (28a, 29a; 28b, 29b), which is located opposite the coupling flank (22a, 23a; 22b, 23b) and encloses with the plane (24a, 25a; 24b, 25b) defined by the associated head surface (17a, 18a; 17b, 18b) an angle (30a, 32a; 30b, 31b) of less than 90°.

2. Coupling device according to claim 1,
**characterised in that**
each of the head surfaces (17a, 18a; 17b, 18b; 17c, 18c) is designed to be at least substantially flat.

3. Coupling device according to claim 1 or 2,
**characterised in that**
each of the head surfaces (17a, 18a; 17b, 18b; 17c, 18c) has at least one face normal (19a, 20a; 19b, 20b; 19c, 20c) with a directional component greater than zero in the circumferential direction (21a; 21b; 21c).

4. Coupling device according to any of the preceding claims,
**characterised in that**
each of the head surfaces (17a, 18a; 17b, 18b; 17c, 18c) has at least one face normal with a radially oriented directional component equal to zero.

5. Coupling device according to claim 1,
**characterised in that**
each of the coupling flank (22a, 23a; 22b, 23b; 22c, 23c) encloses with a plane (34a, 35a; 34b, 35b; 34c, 35c), which is located at the associated jaw base (32a, 33a; 32b, 33b; 32c, 33c) and oriented perpendicular to the actuating device (14a; 14b; 14c), a right angle.

6. Coupling device according to claim 5,
**characterised in that**
each of the head surfaces (17c, 18c) extends as far as the jaw base (32c, 33c).

7. Coupling device according to any of the preceding claims,
**characterised in that**
each of the jaws (15a, 16a; 15b, 16b; 15c, 16c) is located at the end face.

8. Coupling device according to any of the preceding claims,
**characterised in that**
the frictional engagement unit (10a) has at least one frictional engagement element (36a), which is permanently and non-rotatably joined to one of the positive engagement elements (12a, 12b; 12c).

9. Coupling device according to claim 1,
**characterised in that**
the first actuating unit (43a) actuates the frictional engagement unit (10a) and the second actuating unit (44a) actuates the positive engagement unit (11a).

10. Coupling device according to claim 9,
**characterised in that**
the first actuating unit (43a) has an axially movable actuating element (45a), which pushes axially against a plate assembly of the frictional engagement unit (10a) for the non-rotatable connection of a first coupling element (S21a) and a second, stationary coupling element (S22a), whereby the plates of the plate assembly are axially displaced relative to one another until they contact one another and the coupling elements (S21a, S22a) are non-positively connected.

11. Coupling device according to claim 9 or 10,
**characterised in that**
the second actuating unit (44a) has an axially movable actuating element (46a), which is permanently joined to the second positive engagement element (13a) and in an axially displaceable manner but non-rotatably joined to the stationary coupling element (S22a) and thus to a transmission housing (39a), wherein, for the non-rotatable connection of the coupling elements (S21a, S22a) of the second coupling device (S2a), the actuating element (46a) of the second actuating unit (44a) and thus the second positive engagement element (13a) can move axially towards the first positive engagement element (12a) until correspondingly designed jaw toothings of the first positive engagement unit (11a) of the second coupling device (S2a) are in positive engagement and the coupling elements (S21a, S22a) are positively connected to each other.

## Revendications

1. Dispositif d'accouplement pour un véhicule automobile, comprenant une unité d'accouplement (10a) et une unité d'accouplement par complémentarité de forme (11a, 11b, 11c) montée en parallèle à l'unité d'accouplement par friction (11a) qui présenta au moins deux éléments d'accouplement par complémentarité de forme pouvant être reliés l'un à l'autre par complémentarité de forme, un premier élément d'accouplement par complémentarité de forme (12a, 12b, 12c) et un second élément d'accouplement par complémentarité de forme (13a, 13b, 13c) qui sont relativement disposés en coulissement l'un par rapport à l'autre le long d'un dispositif d'actionnement (14a, 15b, 14c) et qui respectivement présentent un crabot (15a, 16a, 15b, 16b, 15c, 16c), deux unités d'actionnement (43a, 44a) indépendantes l'une de l'autres servant à actionner l'unité d'accouplement par friction (10a) et l'unité d'accouplement par complémentarité de forme (11a),
**caractérisé en ce que**
les crabots (15a, 16a, 15b, 16b, 15c, 16c) présentent au moins à certains endroits une surface de tête (17a, 18a, 17b, 18b, 17c, 18c) qui est orientée obliquement au dispositif d'actionnement (14a, 14b, 14c) et
les crabots (15a, 16a, 15b, 16b, 15c, 16c) présentent respectivement un flanc d'accouplement (22a, 23a, 22b, 23b, 22c, 23c) qui respectivement avec un plan défini (24a, 25a, 24b, 25b 24c, 25c) par la surface de tête associée (17a, 18a, 17b, 18b, 17c, 18c) forment un angle (26a, 27a, 26b, 27b, 26c, 27c) qui est supérieur à 90° C et
les crabots (15a, 16a, 15b, 16b) présentent respectivement un flanc (28a, 29a, 28b, 29b) en regard du flanc d'accouplement (22a, 23a, 22b, 23b) qui respectivement forment avec le plan (24a, 25a, 24b, 25b) défini par la surface de tête associée (17a, 1 !a, 17b, 18b) un angle (30a, 31a, 30b, 31b) qui est inférieur à 90 °C.

2. Dispositif d"accouplement selon la revendication 1, **caractérisé en ce que** les surfaces de tête (17a, 18a, 17b, 18b, 17c, 18c) sont respectivement au moins sensiblement plates.

3. Dispositif d'accouplement selon la revendication 1 ou 2, **caractérisé en ce que** les surfaces de tête (17a, 18a, 17b, 18b, 17c, 18c) présentent respectivement au moins une normale de surface (19a, 20a, 19b, 20b, 19c, 20c) ayant une composante de direction orientée dans la direction circonférentielle (21a, 21b, 21c) supérieure à zéro.

4. Dispositif d'accouplement selon l'une quelconque des revendications précédentes, **caractérisé en ce que** les surfaces de tête (17a, 18a, 18b, 17c, 1 !c) présentent respectivement au moins une normale de surface ayant une composante de direction orientée radialement égale à zéro.

5. Dispositif d'accouplement selon la revendication 1, **caractérisé en ce que** les flancs d'accouplement (22a, 23a, 22b, 23b, 22c, 23c) respectivement dotés d'un plan disposé (34a, 35a, 34b, 35b, 34c, 35c) qui est orienté perpendiculairement au dispositif d'actionnement (14a, 14b, 14c) sur la base de crabot associé (32a, 33a, 32b, 33b, 32c, 33c), forment un angle droit.

6. Dispositif d'accouplement selon la revendication 5, **caractérisé en ce que** les surfaces de tête (17c, 18c) s'étendent respectivement jusqu'à la base de crabot (32c, 33c).

7. Dispositif d'accouplement selon l'une quelconque des revendications précédentes, **caractérisé en ce que** les crabots (15a, 16a, 15b, 16b, 15c, 16c) sont disposés respectivement sur la face frontale.

8. Dispositif d'accouplement selon l'une des revendications précédentes, **caractérisé en ce que** l'unité d'accouplement par friction (10a) présente au moins un élément d'accouplement par friction (36a) qui est relié solidaire en rotation en permanence avec l'un des éléments d'accouplement par friction (12a, 12b, 12c).

9. Dispositif d'accouplement selon la revendication 1 **caractérisé en ce que** la première unité d'actionnement (43a) actionne l'unité d'accouplement par friction (10a) et la seconde unité d'actionnement (44a) actionne l'unité d'accouplement par complémentarité de forme (11a).

10. Dispositif d'accouplement selon la revendication 9, **caractérisé en ce que** la première unité d'actionnement (43a) présente un élément d'actionnement (45a) mobile axialement qui comprime pour relier solidaire en rotation un premier élément d'accouplement (S21a) et un second élément d'accouplement fixe (S22a) du dispositif d'accouplement axialement contre un paquet de lamelles de l'unité d'accouplement par friction (10a), de ce fait les lamelles du paquet de lamelles se déplacent axialement les unes par rapport aux autres jusqu'à ce qu'elles se placent les unes à côté des autres et que les éléments d'accouplement (S21a, S22a) soient reliés ensemble à force.

11. Dispositif d'accouplement selon l'une quelconque des revendications 9 à 10, **caractérisé en ce que**
la seconde unité d'actionnement (44a) présente un élément d'actionnement mobile axialement (46a) qui solidarisé de manière permanente peut se déplacer axialement avec le second élément d'accouplement par complémentarité de forme (13a) mais qui relié solidaire en rotation avec l'élément d'accouplement fixe (S22a) et par conséquent qui est relié au carter de transmission (39a), pour relier solidaire en rotation l'élément d'accouplement (S21a, S22a) du second dispositif d'accouplement (S2a) l'élément d'actionnement (46a) de la seconde unité d'actionnement (44a) et ainsi le second élément d'accouplement par complémentarité de forme (13a) pouvant se déplacer axialement dans la direction du premier élément d'accouplement par complémentarité de forme (12a) jusqu'à ce que les dentures de crabot conçues pour correspondre les unes aux autres, de la première unité d'accouplement par complémentarité de forme (11a) du second dispositif d'accouplement (S2a) s'engrènent par complémentarité de forme et que les éléments d'accouplement (S21a, S22a) se relient les uns aux autres par complémentarité de forme.
